# EUROPÄISCHE PATENTSCHRIFT

(11) **EP 1 786 536 B1**
(45) Veröffentlichungstag und Bekanntmachung des Hinweises auf die Patenterteilung: **03.08.2011**
(21) Anmeldenummer: 05782907.9
(22) Anmeldetag: 27.08.2005
(51) Int. Cl.: B01D 25/24, B01D 46/52

(54) **FILTERMEDIUM FÜR EIN FLUID**
FILTER MEDIUM FOR A FLUID
MILIEU FILTRANT POUR UN FLUIDE

(30) Priorität: 02.09.2004 DE 102004042410
(43) Veröffentlichungstag der Anmeldung: 23.05.2007
(73) Patentinhaber: Mahle Filtersysteme GmbH, 70376 Stuttgart (DE)
(72) Erfinder: HARR, Hartmut, 70374 Stuttgart (DE); WAIBEL, Hans, 71686 Remseck/Aldingen (DE)
(74) Vertreter: BRP Renaud & Partner
(86) Internationale Anmeldenummer: PCT/DE2005/001510
(87) Internationale Veröffentlichungsnummer: WO 2006/024276

(56) Entgegenhaltungen:
- EP-A- 0 798 452
- EP-A- 0 900 118
- DE-B- 1 243 151
- FR-A- 2 148 726
- GB-A- 2 095 572
- US-A- 2 599 604
- US-A- 4 310 419
- US-A1- 2004 118 771

## Beschreibung

Die Erfindung betrifft ein Filtermedium für ein Fluid mit einer Vielzahl benachbart angeordneter, rohrförmiger Strömungskanäle nach dem Oberbegriff des Patentanspruchs 1.

Ein solches Filtermedium ist beispielsweise aus der EP0900118A1 bekannt. Die Fluiddurchströmung erfolgt bei einem solchen wabenartig aufgebauten Filterelement in der Weise, dass diejenigen rohrförmigen Strömungskanäle, in die das zu filternde Fluid an einem Ende einströmt, an dem anderen Ende verschlossen sind, damit das Fluid durch die Umfangswände dieser Kanäle in benachbarte Kanäle einströmen kann, deren umgekehrtes Ende jeweils verschlossen ist.

Diese bekannten Filter sind jeweils mit einem, sämtliche Strömungskanäle außen umgebenden, längs der Achsen dieser Strömungskanäle verlaufenden Mantel aus insbesondere undurchströmbarem Material versehen. Dabei ist dieser Mantel mit umlaufenden Dichtmitteln versehen, um das Filtermedium beispielsweise als austauschbares Filterelement in einen Strömungskanal einer Filtereinrichtung austauschbar dicht einsetzen zu können.

Das bekannte Filtermedium kann gemäß der vorgenannten EP0900118A1 als Wickel aus einem Filterbahnenmaterial ausgebildet sein. Ein aufgewickeltes Filterbahnenmaterial steht an seinen Enden, das heißt am Wickelanfang und -ende jeweils über die darunter beziehungsweise darüber liegende Bahn stufenartig ab. Da das gewickelte Bahnenmaterial eines Filtermediums radial außen und innen gedichtet werden muss, ist bei der Erzeugung der betreffenden Dichtungen ein derartiges, stufenförmiges Auslaufen der Enden der Filterbahn ungünstig. In der Regel wird das Bahnenmaterial für ein Wickelfilter radial innen auf einer Leiste aufgewickelt, während radial außen eine Dichtung durch eine den Umfang des Wickelfilters auf einer Teillänge umschließende Dichtung erfolgt.

Die Erfindung beschäftigt sich mit dem Problem, ein Filtermedium, insbesondere in der Form eines Wickelfilters, zu schaffen, das im Vergleich zum vorbekannten Stand der Technik bezüglich der an dessen Außenumfang für eine radiale Dichtung vorzusehenden Maßnahmen wirtschaftlicher und funktionssicherer herstellbar ist.

Gelöst wird dieses Problem durch die kennzeichnenden Merkmale des Anspruchs 1.

Die erfindungsgemäße Ausführung des Filtermediums nach der gesamten Merkmalskombination in Anspruch 1 beruht auf dem allgemeinen Gedanken, einen Umfangsmantel zu schaffen, der leicht aufgebracht werden kann und zumindest einen axialen Teilbereich aus Vlies als radiales Dichtmaterial für ein dichtes Einschieben des Filtermediums in ein Filtergehäuse umfasst. Hierdurch kann das Filtermedium auf einfache Weise für eine dichte Anlage an dem Öffnungsrand eines Strömungskanales einer Filtereinrichtung durch einfaches Einschieben eine ausreichende Dichtung gegenüber dem Öffnungsrand erhalten. Bei ausreichender elastischer Verformbarkeit kann auch filzartiges Material eingesetzt werden. Eine Ummantelung aus Vlies und/oder Filz kann durchlässig für das zu filternde Fluid sein, wobei der Filtrationsgrad nicht schlechter als bei dem übrigen Filtrationsmaterial sein darf. Vlies als Dichtmaterial bewirkt insbesondere, dass das Dichtmaterial nicht an einer Gegenanlagefläche einer Filtereinrichtung anklebt. Ein solches Ankleben erschwert nämlich einen einfachen Austausch des Filters, indem große Lösekräfte zum Lösen des Anklebens erforderlich sind und eine entsprechende Greifeinrichtung an dem Filtermedium für dessen Austausch erforderlich machen.

Bei der Verwendung von Vlies oder Filz als Ummantelungsmaterial kann bahnenförmiges Material eingesetzt werden, wobei dieses Bahnenmaterial in mehrfachen Schichten auf den Kern des Filtermediums aufgewickelt werden kann. Das Ummantelungsmaterial kann mit dem auf dem Umfang des Filtermediums außen liegenden Material der Strömungskanalwände fest durch beispielsweise Verkleben oder Verschweißen verbunden sein.

Der allgemeine Gedanke, der der Lehre des Anspruchs 4 zu Grunde liegt, besteht darin, das doppellagige Filterbahnenmaterial bereits bei der Herstellung als Endlosmaterial so zu gestalten, dass periodisch unterschiedlich gestaltete Längenabschnitte eingeformt werden, die nach einem Ablängen des Filterbahnenmaterials für ein konkret herzustellendes Wickelfilter an dem Wickelanfang und/oder dem Wickelende zu liegen kommen können. Erreicht wird dies dadurch, dass in den betreffenden Längenbereichen des herzustellenden Filterbahnenmaterials die Amplituden der Wellen variiert werden und zwar jeweils von einem Ausgangswert in einem Bereich des Filterbahnenmaterials, das zwischen diesen Endbereichen eines herzustellenden Wickelfilters liegen soll, bis auf einen Wert 0. Sollen in einem Wickelfilter die Anfangs- und Endbereiche des gewickelten Filterbahnenmaterials stufenlos auslaufen, so sind in dem herzustellenden Endlos-Filterbahnenmaterial Längenbereiche vorzusehen, in denen die Wellenamplituden von einem Wert 0 in der Mitte dieses unterschiedlich gestalteten Längenbereiches nach jeweils außen bis auf den Normalwert zwischen diesen Längenbereichen ansteigen. Das Filterbahnenmaterial für ein herzustellendes Wickelfilter ist dann jeweils in der Mitte dieses Längenbereiches mit variierenden Wellenamplituden abzulängen.

Bei der Ausführung nach Anspruch 4 kann der Umfangsmantel, der sich lediglich über einen kurzen axialen Teilbereich erstrecken kann, an sich aus einem beliebigen, elastischen Dichtmaterial bestehen und zwar beispielsweise aus einem Polyurethanschaum.

Für die Herstellung eines Wickelfilters aus gattungsgemäßem Filterbahnenmaterial kann es vorteilhaft sein, auf dem Außenumfang einen lediglich zweilagigen, jedoch ungewellten Bahnenabschnitt vorzusehen. Dies lässt sich ohne weiteres durch eine entsprechende Herstellung des Filterbahnenmaterials erreichen, indem jeweils ein entsprechend langer wellenloser Abschnitt periodisch in dem Filterbahnenmaterial vorgesehen wird.

Erfindungsgemäß gestaltetes Endlos-Filterbahnenmaterial lässt sich äußerst einfach dadurch erzeugen, dass der Abstand der Prägewalzen, die die Wellen in die eine Lage des Filterbahnenmaterials einprägen, während des Prägevorganges abstandsvariiert werden. Hierdurch lassen sich die Wellenamplituden beliebig variieren. Die Prägewalzen liegen jeweils paarweise vor mit ineinander greifenden zahnartigen Prägeprofilen.

Vorteilhafte, nachstehend näher erläuterte Ausführungsbeispiele sind in der Zeichnung dargestellt. Diese Ausführungsbeispiele beziehen sich unter anderem auf ein Wickelfilter aus Filterbahnenmaterial nach dem Anspruch 4 sowie zugehöriger Unteransprüche sowie eine Herstellungsmöglichkeit für ein solches Filterbahnmaterial.

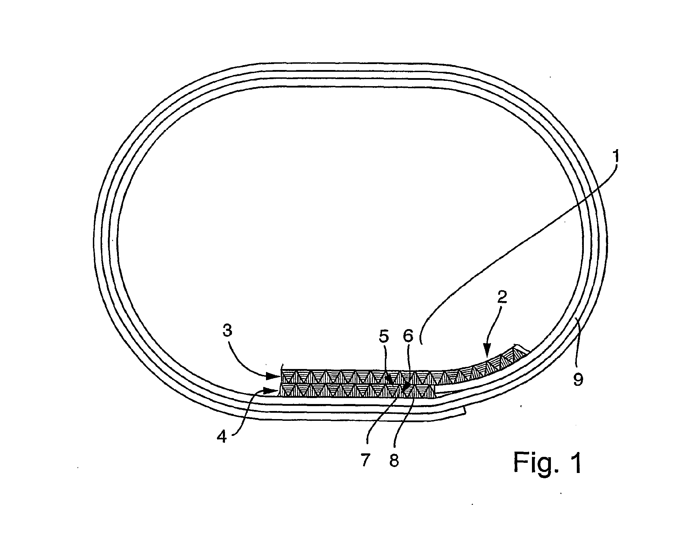

In der Zeichnung zeigen
- Fig. 1: eine Draufsicht auf ein Filtermedium,
- Fig. 2: eine Seitenansicht eines linken Teilbereiches des Filtermediums nach Fig. 1 mit einem angedeuteten Filtergehäuse in einer ersten Ausführung,
- Fig. 3: eine Seitenansicht eines rechten Teilbereiches des Filtermediums nach Fig. 1 mit einem angedeuteten Filtergehäuse in einer alternativen Ausführung.
- Fig. 4: eine Ansicht auf einen Längenausschnitt aus einem Endlos-Filterbahnenmaterial mit unterschiedlich ge- wellten, sich periodisch wiederholenden Längenab- schnitten,
- Fig. 5: eine Draufsicht auf ein Wickelfilter aus Endlos- Filterbahnenmaterial,
- Fig. 6: eine Einrichtung zur Erzeugung eines doppellagigen, gewellten Endlos-Filterbahnenmaterials.

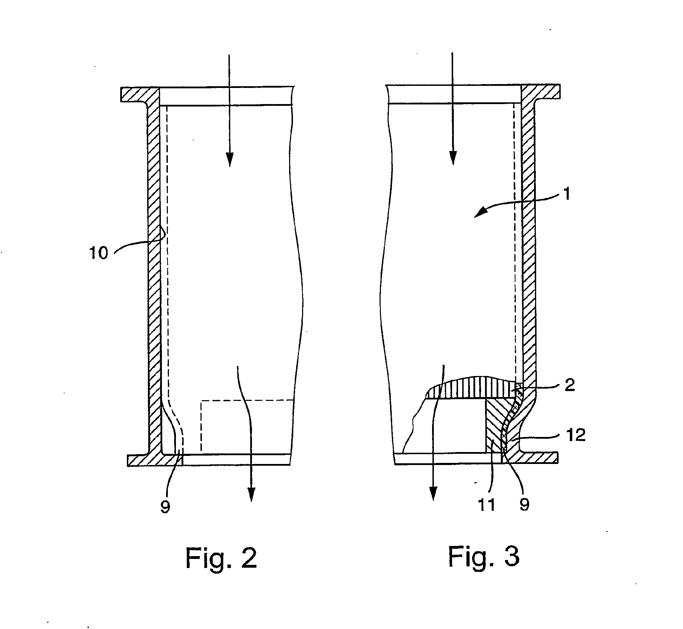

Ein Filtermedium ist aufgebaut aus bahnenförmigem, zu einem Kern 1 gewickeltem Sandwichmaterial 2, wodurch sich ein sogenanntes Wickelfilter ergibt. Dieses Sandwichmaterial 2 besteht aus einer ersten Lage Filtermaterial 3 und aus einer zweiten Lage Filtermaterial 4. Die zweite Lage Filtermaterial 4 besteht aus Bahnenmaterial, das gewellt oder zick-zack-förmig gefaltet ist. Durch das zick-zack-förmig gefaltete beziehungsweise wellenförmig verlaufende zweite Filterbahnmaterial 4 entstehen innerhalb des Sandwichmaterials 2 sowie in Kombination mit den aufeinander aufliegenden, gewickelten Filtermaterial-Lagen 3, 4 Stömungskanäle 5, 6 für ein zu filterndes Fluid. Das Fluid durchströmt das Filtermedium in Richtung der in Figur 2, 3 eingetragenen Strömungspfeile.

Die Strömungskanäle 5 und 6 eines Sandwichmaterials 2 sind jeweils abwechselnd einen- und anderenends verschlossen durch Verschlussmaterial 7 beziehungsweise 8. Das Verschlussmaterial 7 liegt an dem einströmseitigen Ende der Strömungskanäle 5 und das Verschlussmaterial 8 an dem jeweils ausströmseitigen Ende der Strömungskanäle 6. Dadurch tritt das zu filternde Fluid in die Strömungskanäle 6 ein und aus den Strömungskanälen 5 aus. Dabei durchströmt das Fluid auf seinem Weg durch den Kern 1 des Filtermediums die Umfangswände der Strömungskanäle 5, 6, wozu das diese Umfangswände bildende Sandwichmaterial 2 als Filtermaterial durchlässig ausgebildet ist.

Den Außenumfang des Kernes 1 des Filtermediums umschließt ein Umfangsmantel 9. Dieser Umfangsmantel 9 besteht aus mehrfach gewickeltem Vlies in der Form eines Bahnenmaterials. Sowohl die dem Kern 1 direkt benachbarte Wickelschicht des Umfangsmantels 9 sowie die aufeinander gewickelten Schichten selbst sind jeweils mit dem Untergrund, auf dem sie aufliegen, das heißt einerseits dem Kern 1 und andererseits den Wickelschichten selbst verklebt oder auf diese aufgeschweißt. Der Umfangsmantel 9 kann die gesamte Höhe des Kerns 1 des Filterelementes bedecken und insbesondere fluiddurchlässig sein. Dabei muss eine solche Durchlässigkeit zumindest einen Abscheidegrad aufweisen, den das Sandwichmaterial 2 als Filtermaterial besitzt.

In zu den Längsachsen der Strömungskanäle 5, 6 senkrechter Richtung ist das Material des Umfangsmantels 9 elastisch verformbar. Der Grad der Verformbarkeit ist derart, dass der Umfangsmantel 9 als eine Radialdichtung verwendet werden kann. Radialdichtung bedeutet hier, dass das Filtermedium in Längsrichtung der Strömungskanäle 5, 6 dicht in den Umfangsrand einer Kanalöffnung einer Filtereinrichtung austauschbar einschiebbar ist. Eine solche Ausführung ist beispielsweise in Fig. 2 dargestellt, in der der Kanal von einem Filtergehäusebereich 10 gebildet ist. In diesem Kanal liegt das Filtermedium praktisch über die gesamte von den Strömungskanälen 5, 6 des Filtermediums gebildete Länge über das Vlies dicht an, wobei das Vlies geringfügig elastisch verformt zusammengedrückt ist. Ein Vorteil dieser Vlies-Dichtung besteht darin, dass diese nicht an den Dichtflächen anklebt und daher ein leichtes Austauschen des Filtermediums möglich ist.

Eine der Erfindung entsprechende Ausführung eines Filtermediums kann auch darin bestehen, dass der Umfangsmantel 9 nur einen axialen Teilbereich der Gesamthöhe des Filtermediums erfasst, während der andere axiale Bereich in bekannter Weise durch irgendeine Abdeckung verschlossen sein kann. Dabei kann im Sinne der Erfindung auch diese Abdeckung als Filtermaterial ausgeführt sein.

Bei einer in Fig. 3 gezeigten Ausführung des Filtermediums umfasst der Umfangsmantel 9 an einem Ende des Filtermediums einen dort vorgesehenen, mit dem Kern 1 des Filtermediums verbundenen Rahmen 11, der beispielsweise aus Kunststoff bestehen kann. Dieser Rahmen 11 kann umfangsmäßig radial eingezogen sein. Bei einer solchen Ausführung ist in dem Aufnahmekanal des Filtergehäuses ein komplementär eingezogener Bereich 12 vorgesehen. Das Vlies des Umfangsmantels 9 überdeckt durchgehend verlaufend auch den eingezogenen Bereich des Rahmens 11. Die Dichtung des Filtermediums erfolgt bei einer solchen Ausführung ausschließlich oder zumindest in überwiegendem Maße in dem eingezogenen Bereich 12. Auch bei dieser Ausführung der Dichtung neigt diese nicht zu einem Verkleben an den Dichtflächen.

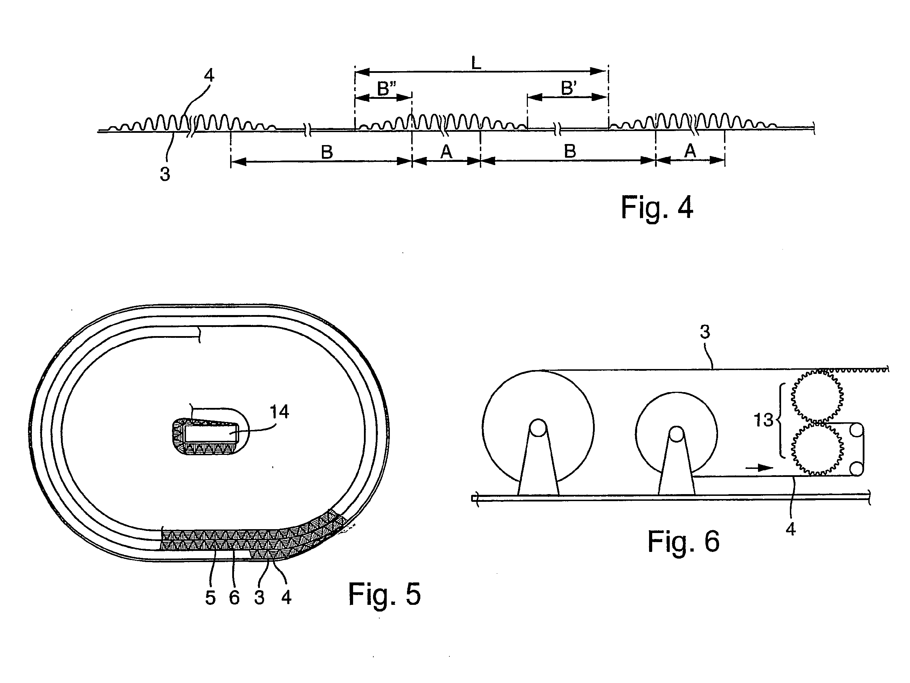

Einen Ausschnitt eines biegsamen, Endlos-Filterbahnmaterials in der Form eines Sandwich-Materials aus einem doppellagigen Filtermaterial besitzt nach der Darstellung in Fig. 4 eine erste Lage 3 aus relieffreiem Endlos-Bahnenmaterial, das heißt einem Bahnenmaterial mit praktisch einer glatten Oberfläche und eine zweite Lage 4 aus gewelltem Bahnenmaterial. Längs des Filterbahnenmaterials wechseln sich periodisch Abschnitte A und B ab. In den Längenabschnitten A weisen die einzelnen Wellen jeweils eine gleiche Amplitude auf. In den Längenbereichen B verringert sich die Wellenamplitude größenmäßig jeweils stetig von einem angrenzenden Abschnitt A aus bis zu einem Nullwert, das heißt bis zu einem ungewellten Zustand. Dieser ungewellte Zustand nimmt in dem Längenabschnitt B einen in Längsrichtung mittleren Bereich ein.

Die Herstellung eines Endlos-Filterbahnmaterials nach Fig. 4 wird nachstehend mit Bezug auf Fig. 6 erläutert.

Die beiden Lagen 3 und 4 des Filterbahnenmaterials werden jeweils von gerollt vorliegendem Ausgangsmaterial abgewickelt und schließlich miteinander zu einem doppellagigem Filterbahnenmaterial vereinigt. Vor der Vereinigung wird das Material der zweiten Lage 2 gewellt. Dieses Wellen erfolgt in einem Paar Prägewalzen 13. Die Walzen dieses Prägewalzenpaares 13 sind jeweils mit ineinandergreifenden Prägeprofilen zur Erzeugung der Wellen versehen.

In dem Zustand, in dem die Prägewalzen 13 in Fig. 6 dargestellt sind, erfolgt eine Wellenprägung mit konstant gleichbleibenden Wellenamplituden.

Zur Erzielung eines Längenabschnittes B des Filtermaterials der zweiten Lage 4 wird der Achsabstand der Prägewalzen 13 variiert, das heißt nach dem Prägen eines Längenabschnittes A stetig so weit vergrößert, bis keine Prägung mehr erfolgt und sodann wieder verkleinert, bis wieder ein dem Längenabschnitt A entsprechender Abstand der Prägewalzen 13 eingestellt ist.

Dieses Herstellungsverfahren kann auf diese Weise kontinuierlich durchgeführt werden, so dass dementsprechend Endlos-Filterbahnenmaterial in zweilagiger Form erzielbar ist.

Fig. 5 zeigt ein Filtermedium aus einem gewickelten Filterbahnenmaterial gemäß der Darstellung in Fig. 4.

Für ein solches Filtermedium in der Form eines Wickelfilters ist aus dem Endlos-Filterbahnenmaterial nach Fig. 4 ein Abschnitt L abzulängen. Ein derart abgelängtes Filterbahnenmaterial wird beginnend mit dem Abschnitt B" auf eine Kernleiste 14 aufgewickelt. Das außenliegende Ende bildet der Abschnitt B', der insgesamt aus ungewelltem, doppellagigem Filterbahnenmaterial besteht.

Bei der Ausführung eines Wickelfilters nach Fig. 5 umfasst der ungewellte Endbereich des Filterbahnenmaterials eine Länge, die es erlaubt, den gesamten Außenumfang des Wickelfilters aus ungewelltem Filtermaterial ausführen zu können. Die von den ersten und zweiten Lagen 3, 4 des Filtermaterials gebildeten, voneinander getrennten Strömungskanäle sind in Fig. 4 mit den Bezugszahlen 5 und 6 belegt. Dabei können beispielsweise die Strömungskanäle 5 an einem axialen Ende des Wickelfilters geschlossen und die Strömungskanäle 6 dagegen auf dem anderen axialen Ende geschlossen sein oder auch umgekehrt.

Zur Vermeidung eines gestuften Auslaufes eines Filterbahnenmaterials an insbesondere dem Außenumfang eines Wickelfilters reicht es im Prinzip bereits aus, das Bahnenmaterial mit einem Längenabschnitt B" auslaufen zu lassen.

## Patentansprüche

1. Filtermedium mit einer Vielzahl benachbart angeordneter, rohrförmiger Strömungskanäle (5, 6), bei dem
- die Strömungskanäle (5, 6) zumindest in Teilbereichen durchströmbare Umfangswände besitzen,
- sämtliche durchströmbaren Bereiche der Umfangswände aus Filtermaterial bestehen,
- die Filtration innerhalb der durchströmbaren Bereiche der Umfangswände erfolgt, wozu die den filtrierenden Umfangswänden zugeordneten Strömungskanäle (5, 6) der Filtration auf ihrer jeweils radial einen Seite ausschließlich ungefiltertem und auf der radial anderen Seite ausschließlich gefiltertem Fluid ausgesetzt sind,
- sämtliche Strömungskanäle (5, 6) über zumindest einen Teilbereich ihrer Länge von einem Umfangsmantel (9) mit einer parallel zu den Längsachsen der Strömungskanäle (5, 6) verlaufenden Mantelfläche umschlossen sind,
- der Umfangsmantel (9) strömungsdicht ausgeführt sein kann oder mindestens Bereiche aufweist, in denen er als Filtermaterial quer durchströmbar ist,
- der Mantel über die Länge der Strömungskanäle (5, 6) des Filtermediums hinausragen kann und zumindest in einem mit Bezug auf die axiale Länge der Strömungskanäle (5, 6) umlaufenden, axialen Teilbereich elastisches Dichtmaterial umfasst, das für eine radiale Dichtfunktion senkrecht zur Mantelfläche elastisch verformbar ist,
**dadurch gekennzeichnet,**
**dass** das von dem Umfangsmantel (9) umfasste elastische Dichtmaterial aus Vlies besteht.

2. Filtermedium nach Anspruch 1
**dadurch gekennzeichnet,**
**dass** sich das elastische Dichtmaterial, das der Umfangsmantel (9) umfasst, über die gesamte Länge des Umfangsmantels (9) erstreckt.

3. Filtermedium nach Anspruch 1 oder 2,
**dadurch gekennzeichnet,**
**dass** das elastische Material, das der Umfangsmantel (9) umfasst, aus mehrfach um den Kern (1) des Filtermediums gewickeltem Bahnenmaterial besteht.

4. Filtermedium nach einem der Ansprüche 1 bis 3,
**dadurch gekennzeichnet,**
- **dass** die Strömungskanäle in einem doppellagigen Filtermaterial ausgebildet sind, dessen erste Lage (3) eine durchgehend reflieffreie Oberfläche aufweist und dessen zweite Lage (4) zur Längsrichtung des Filtermaterials wellig ausgebildet ist, wobei die beiden Lagen (3, 4) unter Bildung der zwischen den beiden Lagen durchströmbaren Strömungskanäle an den der ersten Lage zugewandten Wellenbergen der zweiten Lage dicht miteinander verbunden sind, und
- **dass** die zweite Lage (4) periodisch konstant aufeinander folgende erste und zweite Längenabschnitte (A, B) mit voneinander unterschiedlichen Wellenamplituden aufweist, wobei im ersten Längenabschnitt (A) ausschließlich Wellen gleicher Amplituden vorhanden sind und im zweiten Längsabschnitt (B) die Maße der Amplituden variieren, derart, dass die Amplituden beginnend an einem vorausgehenden ersten Längenabschnitt (A), stetig von dem dort gegebenen Maß bis auf Null abnehmen und nachfolgend wieder auf das im
nachfolgenden ersten Längsabschnitt vorliegende Maβ ansteigen.

5. Filtermedium nach Anspruch 4,
**dadurch gekennzeichnet,**
**dass** ein Längenbereich (B'), in dem die Wellen innerhalb des zweiten Längsabschnittes (B) keinen Amplitudenausschlag besitzen, zumindest einer von einer Doppelwelle im ersten Längenabschnitt (A) eingenommenen Länge entspricht.

6. Filtermedium nach einem der Ansprüche 4 und 5,
**dadurch gekennzeichnet,**
**dass** zumindest ein Ende des Filtermaterials an dem zweiten Längenabschnitt (B) mit variierenden Maßen der Wellenamplituden vorgesehen ist.

7. Filtermedium nach Anspruch 6,
**dadurch gekennzeichnet,**
**dass** auf dem Außenumfang eines aus dem Filtermaterial gebildeten Wickels ein den gesamten Außenumfang mindestens einmal umschließender zweiter Längenabschnitt B angeordnet ist.

8. Filtermedium nach Anspruch 7,
**dadurch gekennzeichnet,**
**dass** innerhalb des den Außenumfang umschließenden Längenabschnittes des Filtermaterials die zweite Lage (4) bis auf einen schmalen Übergangsbereich mit stetig abnehmenden Maßen der Amplituden der eingeformten Wellen mit einem ungewellten Bereich vorliegt.

9. Verfahren zur Herstellung eines Filtermediums nach Anspruch 4 oder 5,
**dadurch gekennzeichnet,**
**dass** die beiden Lagen (3, 4) des doppellagigen Filtermaterials als Endlosbahnen miteinander vereinigt werden, wobei die zweite Lage (4) in einem Prägewalzenpaar (13) vor Vereinigung der Endlosbahnen gewellt wird, wobei die ausschließlich Wellen mit gleicher Amplitude aufweisenden Längenabschnitte bei einem konstanten Abstand innerhalb des Prägewalzenpaares (13) erzeugt werden, und wobei zur Erzeugung der Längenabschnitte mit variierenden Maßen der Wellenamplituden der Achsabstand innerhalb des Prägewalzenpaares (13) während der Prägung entsprechend variiert wird.

## Claims

1. A filter medium having a plurality of adjacently arranged tubular flow channels (5, 6), wherein
- at least in sub-areas, the flow channels (5, 6) have circumferential walls through which a flow can pass,
- all areas of the circumferential walls through which a flow can pass consist of filter material,
- the filtration takes place within the areas of the circumferential walls through which a flow can pass, for which purpose the flow channels (5, 6) assigned to the filtering circumferential walls are exposed in each case on their one radially located side to solely unfiltered fluid and on their other radially located side solely to filtered fluid,
- all flow channels (5, 6) are enclosed at least over a sub-area of their length by a circumferential shell (9) having a lateral shell surface extending parallel to the longitudinal axes of the flow channels (5, 6),
- the lateral shell surface (9) can be configured in a flow-tight manner or has at least areas in which it acts as filter material through which a transverse flow can pass,
- the shell can project beyond the length of the flow channels (5, 6) of the filter medium and comprises elastic sealing material at least in an axial sub-area which extends circumferentially with respect to the axial length of the flow channels (5, 6), which sealing material is elastically deformable perpendicular to the lateral shell surface for a radial sealing function,
**characterized in**
**that** the sealing material comprised by the circumferential shell (9) consists of fleece.

2. The filter medium according to claim 1,
**characterized in**
**that** the elastic sealing material comprised by the circumferential shell (9) extends over the entire length of the circumferential shell (9).

3. The filter medium according to claim 1 or claim 2,
**characterized in**
**that** the elastic material comprised by the circumferential shell (9) consists of web material wound multiple times around the core (1) of the filter medium.

4. The filter medium according to any one of the claims 1 to 3,
**characterized in**
- **that** the flow channels are formed in a double-layered filter material, the first layer (3) of which has a continuous relief-free surface and the second layer (4) of which is formed corrugated with respect to the longitudinal direction of the filter material, wherein the two layers (3, 4), while forming the flow channels through which a flow can pass between the two layers, are closely connected to each other at the second layer's wave crests facing toward the first layer, and
- **that** the second layer (4) has first and second periodically constant successive length portions (A, B) with wave amplitudes which are different from each other, wherein in the first length portion (A) solely waves with equal amplitudes are present and in the second longitudinal portion (B), the sizes of the amplitudes vary such that beginning at a preceding first length portion (A), the amplitudes decrease continuously from the size present there down to zero and subsequently increase again to the size present in the subsequent first longitudinal portion.

5. The filter medium according to claim 4,
**characterized in**
**that** a length region (B'), in which the waves within the second longitudinal portion (B) have no amplitude response, corresponds at least to a length covered by a double wave in the first length portion (A).

6. The filter medium according to any one of the claims 4 and 5,
**characterized in**
**that** at least one end of the filter material is provided at the second length portion (B) having varying sizes of wave amplitudes.

7. The filter medium according to claim 6,
**characterized in**
**that** on the outer circumference of a wrap formed from the filter material, a second length portion B is arranged which encloses the entire outer circumference at least once.

8. The filter medium according to claim 7,
**characterized in**
**that** within the filter material's length portion enclosing the outer circumference, the second layer (4), except for a narrow transition area with continuously decreasing amplitude sizes of the formed waves, is present with a non-corrugated area.

9. A method for producing a filter medium according to claim 4 or claim 5,
**characterized in**
**that** the two layers (3, 4) of the double-layered filter material are interconnected as endless web, wherein the second web (4) is corrugated in a pair of embossing rolls (13) prior to interconnecting the endless webs, wherein the length portions having solely waves with equal amplitude are generated with a constant distance within the pair of embossing rolls (13), and wherein for generating the length portions having varying sizes of wave amplitudes, the center to center distance within the pair of embossing rolls (13) is adequately varied during embossing.

## Revendications

1. Elément filtrant comportant une pluralité de canaux d'écoulement (5, 6) tubulaires, disposés côté à côté, dans lequel
- les canaux d'écoulement (5, 6) possèdent au moins dans des zones partielles des parois circonférentielles à travers lesquelles passe un écoulement,
- toutes les portions des parois circonférentielles à travers lesquelles passe un écoulement sont constituées d'un matériau filtrant,
- la filtration a lieu à l'intérieur des zones des parois circonférentielles à travers lesquelles passe un écoulement, moyennant quoi les canaux d'écoulement (5, 6) de la filtration coordonnés aux parois circonférentielles filtrantes sont exposés sur respectivement un de leurs côtés radialement exclusivement à un fluide non filtré et sur un autre de leurs côtés radialement exclusivement à un fluide filtré,
- tous les canaux d'écoulement (5, 6) sont encerclés sur au moins une zone partielle de leur longueur par une gaine circonférentielle (9) comportant une surface de gaine s'étendant parallèlement aux axes longitudinaux des canaux d'écoulement (5, 6),
- la surface de gaine (9) peut être réalisée de manière étanche à l'écoulement ou présente au moins des portions, dans lesquelles elle peut être traversée transversalement en tant que matériau filtrant,
- la gaine peut dépasser par-dessus la longueur des canaux d'écoulement (5, 6) de l'élément filtrant et comprend au moins dans une zone partielle axiale, circonférentielle par rapport à la longueur axiale des canaux d'écoulement (5, 6), un matériau d'étanchéité élastique, qui peut être déformé élastiquement en vue d'une fonction d'étanchéité radiale perpendiculairement à la surface de gaine,
**caractérisé en ce que**
le matériau d'étanchéité élastique compris par la gaine circonférentielle (9) est constitué d'un voile non tissé.

2. Elément filtrant selon la revendication 1,
**caractérisé en ce que**
le matériau d'étanchéité élastique, qui comprend la gaine circonférentielle (9) s'étend sur la totalité de la longueur de la gaine circonférentielle (9).

3. Elément filtrant selon la revendication 1 ou 2,
**caractérisé en ce que**
le matériau élastique, qui comprend la gaine circonférentielle (9), est constitué d'un matériau de bande enroulé plusieurs fois autour du noyau (1) de l'élément filtrant.

4. Elément filtrant selon une des revendications 1 à 3,
**caractérisé en ce que**
- les canaux d'écoulement sont réalisés dans un matériau filtrant à double couche, dont la première couche (3) présente une surface exempte de relief de bout en bout et dont la deuxième couche (4) est réalisée en ondulations par rapport à la direction longitudinale du matériau filtrant, dans lequel les deux couches (3, 4) sont reliées de manière étanche l'une à l'autre en formant les canaux d'écoulement à travers lesquels passe un écoulement entre les deux couches sur les crêtes d'ondulations de la deuxième couche tournées vers la première couche,
- la deuxième couche (4) présente une première et une deuxième portion longitudinale (A, B) se suivant de manière périodiquement constante avec des amplitudes d'ondulations différentes l'une de l'autre, dans lequel dans la première portion longitudinale (A) exclusivement des ondulations de mêmes amplitudes sont présentes et dans la deuxième portion longitudinale (B) les proportions des amplitudes varient, de telle sorte que les amplitudes diminuent en commençant par une première portion longitudinale précédente(A) continuellement de la proportion qui y prédomine jusqu'à zéro, et augmentent ensuite à nouveau à la proportion prédominante dans la première portion longitudinale suivante.

5. Elément filtrant selon la revendication 4,
**caractérisé en ce que**
une portion longitudinale (B'), dans laquelle les ondulations ne possèdent pas de débattement d'amplitude à l'intérieur de la deuxième portion longitudinale (B), correspond au moins à une longueur adoptée par un arbre double dans la première portion longitudinale (A).

6. Elément filtrant selon une des revendications 4 et 5,
**caractérisé en ce que**
au moins une extrémité du matériau filtrant est prévue sur la deuxième portion longitudinale (B) avec des proportions variables des amplitudes d'ondulations.

7. Elément filtrant selon la revendication 6,
**caractérisé en ce que**
sur la circonférence extérieure d'un enroulement formé à partir du matériau filtrant, une deuxième portion longitudinale B encerclant au moins une fois la totalité de la circonférence extérieure est disposée.

8. Elément filtrant selon la revendication 7,
**caractérisé en ce que**
à l'intérieur de la potion longitudinale du matériau filtrant encerclant la circonférence extérieure, la deuxième couche (4) est présente jusqu'à une zone de transition mince aux proportions diminuant continuellement des amplitudes des ondulations formées avec une zone non ondulée.

9. Procédé de fabrication d'un élément filtrant selon la revendication 4 ou 5,
**caractérisé en ce que**
les deux couches (3, 4) du matériau filtrant à deux couches sont réunies l'une à l'autre comme des bandes sans fil, dans lequel la deuxième couche (4) est ondulée dans une paire de cylindres gaufreurs (13) avant la réunion des bandes sans fin, dans lequel les portions longitudinales présentant exclusivement des ondulations à amplitude identique sont produites avec un espacement constant à l'intérieur de la paire de cylindres gaufreurs (13), et dans lequel pour produire les portions longitudinales aux proportions variables des amplitudes d'ondulations, l'entraxe est varié de manière correspondante pendant le gaufrage à l'intérieur de la paire de cylindres gaufreurs (13).
